# EUROPEAN PATENT SPECIFICATION

(11) **EP 2 690 203 B1**
(45) Date of publication and mention of the grant of the patent: **14.09.2016**
(21) Application number: 12760530.1
(22) Date of filing: 07.03.2012
(51) Int. Cl.: C25D 13/00, C25D 5/02, C25D 7/00, C25D 13/12, C25D 13/04, C25D 13/20, C09D 5/44, C25D 5/42, C25D 5/44, C25D 13/22, C25D 15/00, C25D 11/30

(54) **METAL MEMBER AND METHOD FOR MANUFACTURING SAME**
METALLELEMENT UND VERFAHREN ZU SEINER HERSTELLUNG
ÉLÉMENT MÉTALLIQUE ET SON PROCÉDÉ DE FABRICATION

(30) Priority: 22.03.2011 JP 2011063323
(43) Date of publication of application: 29.01.2014
(73) Proprietor: Sumitomo Electric Industries, Ltd., Osaka-shi, Osaka 541-0041 (JP)
(72) Inventor: MIZUNO, Osamu, Itami-shi Hyogo 664-0016 (JP); NUMANO, Masatada, Itami-shi Hyogo 664-0016 (JP); INOKUCHI, Kohji, Itami-shi Hyogo 664-0016 (JP)
(74) Representative: Boult Wade Tennant
(86) International application number: PCT/JP2012/055848
(87) International publication number: WO 2012/128046

(56) References cited:
- WO-A1-99/02759
- CN-A- 101 293 460
- JP-A- 1 097 698
- JP-A- 4 276 096
- JP-A- 63 293 196
- JP-A- 2001 131 793
- JP-A- 2007 239 057
- JP-B1- 46 029 364
- JP-B2- 2 578 167
- JP-B2- 4 001 078
- US-A- 3 963 568
- US-A1- 2009 041 988

## Description

### Technical Field

The present invention relates to a metal member that includes a metal substrate having a covering layer on a surface thereof and a method for manufacturing the metal member. More particularly, the present invention relates to a metal member that includes regions having different surface textures.

### Background Art

There are metal members that include a metal substrate having a finely roughened surface to enhance their metallic textures and are used as housings for portable electrical equipment.

Because of its high activity, a bare surface of a metal substrate made of a light alloy may be rusted. Thus, a corrosion-resistant covering layer must be formed on the surface of the metal substrate. For example, Patent Literature 1 discloses a metal member that includes a magnesium alloy substrate having a diamond-cut or hairline-finished surface and a covering layer made of a transparent resin disposed on the surface. US 2009/041966 A1 relates to a housing for an electronic device and a method for making the same. CN 101293460 A relates to a light metallic material incrustation method.

### Citation List

### Patent Literature

PTL 1: Japanese Unexamined Patent Application Publication No. 2009-120877

### Summary of Invention

### Technical Problem

There is a recent demand for metal members, such as housings described above, that have an improved metallic texture for a high quality appearance. In accordance with Patent Literature 1, a rough surface, such as a hairline-finished surface, of a metal substrate can be seen through a transparent covering layer to visually improve its metallic texture. Because of a flat and smooth surface of the covering layer disposed on the metal substrate, however, it is difficult to feel the tactile texture of the roughened metal substrate. Even if the rough texture can be visually felt, it is impossible to feel the rough texture both visually and tactually.

The tactile texture of the covering layer is independent of the surface texture of the metal substrate. There are no studies on forming a covering layer having different tactile textures. There are also no studies on a covering layer having different visual textures.

In view of the situations described above, it is an object of the present invention to provide a metal member that includes a metal substrate having a covering layer provided thereon and includes surface regions in which visual or tactile textures are partially different.

It is another object of the present invention to provide a method for manufacturing the metal member.

### Solution to Problem

The present invention achieves these objects by modifying a method for forming a covering layer such that a desired surface region of a metal substrate can be selectively coated.

For example, a method for forming a covering layer may include the use of a mask. First, a metal substrate is coated with a paint while a surface portion (desired surface region) of the metal substrate is masked to form a portion of the covering layer. After the mask is removed, the portion of the covering layer is masked. The other surface portion of the metal substrate is then coated with another paint that is visually or tactually different from the first paint. Thus, according to the above-process, the resulting covering layer on the metal substrate can have visually or tactually different textures. However, the operation is difficult to do in a fine masked region, and the formation of the covering layer using the mask requires complex work.

As a result of extensive studies, the present inventors found that a covering layer containing surface regions having visually or tactually different textures can be easily formed without using a mask by forming an insulating layer on the entire surface of a metal substrate, removing the insulating layer in a desired region to expose the surface of the metal substrate, and forming a layer on the exposed surface by electrodeposition coating or electroplating. The present invention is based on this finding.

A metal member according to the present invention is according to claim 1.

The texture includes a tactile texture and a visual texture. The metal member may include surface regions having tactually or visually different textures or tactually and visually different textures.

Since the insulating layer and the electrodeposited layer are made of materials having different textures, the metal member can include regions having different surface textures.

When the insulating layer and the electrodeposited layer have different tactile textures, the tactile texture can be altered from portion to portion. For example, when the covering layer includes a rough surface region and a flat and smooth surface region, a metallic luster due to the presence and absence of asperities can be achieved with the tactile texture of the asperities. When the insulating layer and the electrodeposited layer have different visual textures, the visual texture can be altered from portion to portion. For example, when the covering layer includes a matte region and a transparent region, the matte region can have a soft visual texture, and the surface of the metal substrate can be seen through the transparent region. Thus, the high-quality metallic texture of the metal substrate can be experienced as the visual texture. When the covering layer has a matte metallic texture over the entire surface, the insulating layer and the electrodeposited layer can have different degrees of matte to alter the color tone from portion to portion. Thus, the different degrees of matte can be experienced as the visual texture.

In the present invention, the textures of the insulating layer and the electrodeposited layer are tactually and visually differentiated from each other to provide different textures each having a tactile texture that conforms to its visual texture. For example, when one portion of the covering layer is a rough region having a matte metallic texture, the rough region has not only a visual texture due to asperities but also a tactile texture that conforms to its visual texture due to asperities. When the other portion of the covering layer is a flat and smooth region being transparent and disposed on a mirror-finished metal substrate, the visual metallic texture of the mirror-finished shiny metal substrate and the tactile texture of the flat and smooth covering layer that conforms to the mirror-finished surface can simultaneously be achieved despite the mirror-finished surface being underneath the covering layer. Thus, the metal member including such a covering layer can have a visual texture that conforms to its tactile texture. This can solve the problem of the related art that the visual texture of asperities does not conform to the corresponding tactile texture when an entirely flat and smooth covering layer is used.

Furthermore, when the insulating layer and the electrodeposited layer are made of materials of different colors, the visual textures of the insulating layer and the electrodeposited layer may be differentiated from each other to put a decoration, such as a pattern or letters, on the metal member. The insulating layer and the electrodeposited layer of a covering layer according to the present invention can be independently formed so as to have individual colors. This can prevent the occurrence of irregular color.

Since the insulating layer is made of an insulating material, and the electrodeposited layer is formed by electrodeposition coating, the electrodeposited layer can be selectively formed on a portion of the metal substrate, and the covering layer can be easily formed without using a mask by a method for manufacturing a metal member according to the present invention described below.

In a metal member according to one aspect of the present invention, at least one of the insulating layer and the electrodeposited layer formed by electrodeposition coating is made of a resin containing an additive agent.

As for a method for making a difference on the textures between the insulating layer and the electrodeposited layer, the tactile and visual textures can be easily and partially altered by using a resin containing an additive agent as a material for the layers. In particular, to form the rough surface region by containing the additive agent, a metallic material, such as Al, can be used as the additive agent to visually improve the shiny metallic texture of the rough surface region. As an example other than metallic materials, mica can also be used to improve the metallic texture. The shape of the additive agent may be fibrous, flat, or particulate. SiO₂ or polymer particles may be used as the additive agent to visually improve the matte metallic texture. In particular, transparent additive agents are preferably used to further improve the tactile texture. The metal additive agent, such as Al, and an additive agent like SiO₂ may be mixed to tactually and visually improve a texture containing both the shiny metallic texture and the matte metallic texture. Alternatively, a transparent resin layer containing an additive agent such as SiO₂ or the like may be stacked on a resin layer containing a metal additive agent. The size or amount of the additive agent can be controlled to alter the degree of the tactile texture or the visual texture.

In a reference example, the metal substrate includes a mirror-finished surface portion on a part of the surface of the metal substrate, one of the insulating layer and the electrodeposited layer formed by electrodeposition coating is made of a transparent resin disposed on the finished surface portion, and the other of the insulating layer and the electrodeposited layer formed by electrodeposition coating is made of a resin containing an additive agent.

The tactile texture of the metal member is independent of the surface texture of metal substrate but depends on the surface texture of the covering layer. The visual texture of the metal member may depend on the visual surface texture of the covering layer or the visual surface texture of the metal substrate. The formation of a mirror-finished surface portion on a part of the metal substrate can improve the shiny, flat and smooth metallic texture of the metal substrate. Since the electrodeposited layer is made of a transparent resin disposed on the finished surface portion, the metallic texture of the finished surface portion can be seen through the transparent layer. Although the transparent layer may be colored, the color of the metal substrate itself can be easily recognized through a colorless transparent layer. The term "transparent", as used herein, means that the metal substrate can be seen through the covering layer and includes translucent. Since the transparent layer generally has a flat and smooth surface, the region viewed from the top of the metal member can have a tactually flat and smooth texture as well as a visually flat and smooth texture. Since the insulating layer is made of a resin containing an additive agent, the asperities due to the additive agent can be tactually and visually perceived as a matte metallic texture. Thus, the insulating layer and the electrodeposited layer can have different textures, and each of the insulating layer and the electrodeposited layer can have a tactile metallic texture that conforms to its visual metallic texture.

In a metal member according to one aspect of the present invention, the insulating layer and the electrodeposited layer formed by electrodeposition coating have different colors.

When the insulating layer and the electrodeposited layer are made of materials of different colors, a decoration, such as a pattern or letters, may be put on the metal member. The term "different colors", as used herein, includes colorless as well as colored. The different colorless materials may be a combination of transparent and opaque materials or a combination of transparent and translucent materials.

In a metal member according to one aspect of the present invention, the metal substrate is made of a magnesium alloy.

Because of their light weight and high specific strength, magnesium alloys are suitably used in housings for portable electrical equipment. In particular, Mg-Al alloys containing Al have high corrosion resistance, high strength, and excellent mechanical characteristics, such as plastic deformation resistance. In particular, the Al content is preferably in the range of 2.5% to 9.5% by mass. Examples of the representative compositions of Mg-Al alloys having the Al content described above include AZ31, AZ61, AM60, and AZ91 alloys according to the American Society for Testing and Materials standards.

A metal member according to the present invention can be easily manufactured by the following method. A method for manufacturing a metal member according to the present invention is according to claim 8.

Through these steps, the covering layer including the insulating layer and the electrodeposited layer is formed on a surface of the metal substrate. According to this structure, the formation method in the electrodeposited-layer-forming step, that is, electrodeposition coating can selectively form the electrodeposited layer only on the exposed portion that is formed on a portion of the metal substrate. Thus, the covering layer containing surface regions having visually or tactually different textures can be easily formed without using a mask.

In a method for manufacturing a metal member according to one aspect of the present invention, the removing step is performed by irradiating the insulating layer with a laser beam.

The method for removing a portion of the insulating layer using laser irradiation can be used to completely remove a desired target region, even a fine region or a corner region, of the insulating layer.

### Advantageous Effects of Invention

Since the insulating layer and the electrodeposited layer of a metal member according to the present invention are made of materials having different textures, the metal member can include regions having different surface textures. In particular, the tactile texture can be differentiated from the visual texture, and each region can have a tactile metallic texture that conforms to its visual metallic texture, thereby effectively improving the metallic texture.

A method for manufacturing a metal member according to the present invention can be used to selectively apply a coating to a desired surface region of a metal substrate to easily form a covering layer including surface regions having visually or tactually different textures without using a mask.

### Brief Description of Drawings

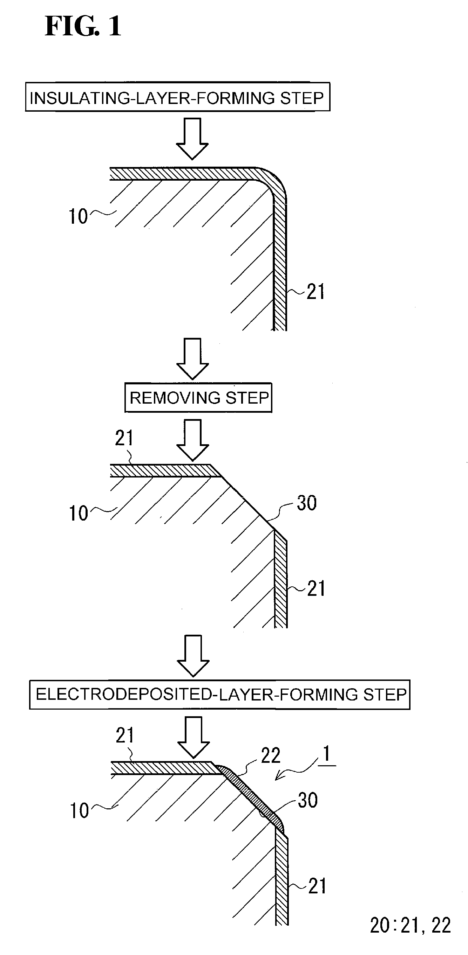

[Fig. 1] Figure 1 is an explanatory view of a method for manufacturing a metal member according to an embodiment of the present invention.

### Description of Embodiments

A metal member according to an embodiment of the present invention will be described below.

### «Metal Member»

A metal member according to the present invention includes a metal substrate and a covering layer disposed on the metal substrate.

### [Metal Substrate]

The metal substrate constituting a metal member according to the present invention is preferably a light alloy, such as a magnesium alloy or an aluminum alloy. In particular, the magnesium alloy has high strength and preferably contains at least one element selected from the group consisting of Al, Zn, Mn, Si, Ca, Be, Sr, Y, Cu, Ag, Sn, Au, Ni, Li, Zr, Ce, and rare-earth elements (other than Y and Ce), which constitutes 2.5% by mass or more in total. The remainder may be Mg and incidental impurities.

In particular, Mg-Al alloys containing Al have high corrosion resistance, high strength, and excellent mechanical characteristics, such as plastic deformation resistance. These effects tend to increase with increasing Al content. Thus, the Al content is preferably 4.5% by mass or more, more preferably 7% by mass or more. An Al content of more than 12% by mass, however, results in poor plastic formability. Thus, the upper limit is preferably 12% by mass, more preferably 11% by mass. The amount of element(s) described above other than Al is preferably 0.01% by mass or more and 10% by mass or less, particularly preferably 0.1% by mass or more and 5% by mass or less, in total. Examples of the impurities include Fe. The rare-earth element content is preferably 0.1% by mass or more. In particular, the Y content is preferably 0.5% by mass or more.

Examples of more specific compositions of the Mg-Al alloy include AZ alloys (Mg-Al-Zn alloys, Zn: 0.2% to 1.5% by mass), AM alloys (Mg-Al-Mn alloys, Mn: 0.15% to 0.5% by mass), Mg-Al-rare-earth element (RE) alloys, AX alloys (Mg-Al-Ca alloys, Ca: 0.2% to 6.0% by mass), and AJ alloys (Mg-Al-Sr alloys, Sr: 0.2% to 7.0% by mass) as defined in the American Society for Testing and Materials standards. Particularly preferred are Mg-Al alloys in which Al constitutes 7.3% by mass or more and 12% by mass or less, more specifically, Mg-Al alloys in which Al constitutes 8.3% to 9.5% by mass and Zn constitutes 0.5% to 1.5% by mass, typically an AZ91 alloy, because of their high strength and corrosion resistance.

The metal substrate is typically a rolled member manufactured by rolling a cast member, a processed member manufactured by heat treatment, leveling process, or polishing processing, of the rolled member, or a plastic-worked member manufactured by plastic working, such as press forming, bending, or forging, of the rolled member or the processed member. A metal substrate subjected to plastic working, such as rolling or press forming, has a small crystal grain size, better mechanical characteristics, such as higher strength, than the cast member, less internal defects or surface defects, such as shrinkage cavities or pores, and a satisfactory surface texture. Since the rolled member has less surface defects than the cast member, use of the rolled member can reduce the number of or obviate the necessity for puttying operations of a defect (defect repair) before the formation of the covering layer. Furthermore, use of the rolled member can reduce the occurrence of defectives due to insufficient defect repair, thus contributing to an improved product yield.

### [Covering Layer]

The covering layer includes a region containing an insulating layer made of an insulating material and a region containing an electrodeposited layer having a different texture from the insulating layer and formed by electrodeposition coating or electroplating.

### (Insulating Layer)

The insulating layer is made of a material that is resistant to the conditions for forming an electrodeposited layer described below. Since the electrodeposited layer is formed by electrodeposition coating, the insulating layer is made of an alkali-resistant heat-resistant (preferably 160°C or more, more preferably 180°C or more) insulating material. The material of the insulating layer may be an epoxy resin, an acrylic resin, or a urethane resin. The color (such as colored or colorless, or transparent or opaque), thickness, and design of the insulating layer can be appropriately selected for each desired application.

The material of the insulating layer contains an additive agent. The tactile and visual textures of the insulating layer can be easily altered with the additive agent. The additive agent may be electrically conductive or nonconductive, provided that the desired texture can be achieved. The size or amount of the additive agent can be controlled to alter the tactile texture or the visual texture. Al is used as an additive agent to impart a shiny metallic texture to a rough surface region. SiO₂ is used as the additive agent to visually improve the matte metallic texture. In particular, transparent additive agents are preferably used to improve the tactile texture. The shape of the additive agent is particulate. For example, Al particles have an average particle size in the range of 0.5 to 50 µm, and SiO₂ particles have an average particle size in the range of 0.2 to 50 µm. The amount of Al to be added is in the range of 1% to 30% by volume of the insulating layer, and the amount of SiO₂ to be added is in the range of 0.5% to 30% by volume of the insulating layer.

The insulating layer may have an anticorrosive layer facing the metal substrate. The anticorrosive layer may be formed by anticorrosion treatment, such as chemical conversion treatment. The anticorrosive layer can increase the adhesion between the insulating layer and the metal substrate. The insulating layer may have a multilayer structure including the anticorrosive layer and another additional layer.

### (Electrodeposited Layer)

The electrodeposited layer is made of a material having a different texture from the insulating layer. The texture includes a tactile texture and a visual texture, and one or both of the tactile texture and the visual texture may be different. The material of the electrodeposited layer may be an epoxy resin, an acrylic resin, or a urethane resin. The thickness, and design of the electrodeposited layer can be appropriately selected for each desired application.

As in the case of the insulating layer, the material of the electrodeposited layer may contain an additive agent. The electrodeposited layer may have an anticorrosive layer facing the metal substrate.

The electrodeposited layer is formed by electrodeposition coating. This formation method will be described in detail later.

### «Method for Manufacturing Metal Member»

A metal member according to the present invention can be easily manufactured through the following insulating-layer-forming step, removing step, and electrodeposited-layer-forming step. Each of the steps of the manufacturing method will be described below with reference to Fig. 1. Figure 1 is an enlarged view of a portion of a cross section of a metal member according to the present invention.

### [Insulating-Layer-Forming Step]

In the insulating-layer-forming step, an insulating layer 21 made of an insulating material is formed on the entire surface of a metal substrate 10. The insulating layer 21 may be formed by a known method, such as spray coating, electrodeposition coating, or electrostatic coating.

### [Removing Step]

In the removing step, a portion of the insulating layer 21 is removed to form an exposed portion 30 of the metal substrate 10 where the metal substrate 10 is exposed on a surface. The portion of the insulating layer 21 may be removed by a chemical or physical method. The chemical removal method may be a method using a high-temperature alkaline (hot alkaline) aqueous solution. In this case, a region to be removed is immersed in the aqueous hot alkaline solution. Thus, the removal of a fine region may require the masking of a region that is not removed. Examples of the physical removal method include diamond cutting, laser irradiation processing, and sandblasting. In particular, laser irradiation can completely remove a fine region or a corner region. A portion of the insulating layer 21 to be removed by the method includes a continuous region or discontinuous regions. In Fig. 1, a portion of the insulating layer on a corner region of the metal substrate 10 is removed.

### [Electrodeposited-layer-forming step]

In the electrodeposited-layer-forming step, a paint having a different texture from the insulating layer 21 is applied to the exposed portion 30 by electrodeposition coating to form an electrodeposited layer 22. Since an electric current flows through the exposed portion 30 during the paint application, the electrodeposited layer 22 can be easily and selectively formed on the portion of the metal substrate 10 without using a mask. Through the three steps, a metal member 1 can be manufactured that includes a covering layer 20 formed of the insulating layer 21 and the electrodeposited layer 22 on the surface of the metal substrate 10.

A metal member according to an embodiment of the present invention will be further described below.

### «First Embodiment»

A metal member according to a first embodiment includes tactually and visually different surface regions. Each of the regions has a tactile metallic texture that conforms to its visual metallic texture.

First, the entire surface of a metal substrate made of a magnesium alloy is coated with a colorless transparent epoxy resin. A colorless transparent acrylic resin containing an additive agent that contains Al (having an average particle size of 10 µm) and SiO₂ (having an average particle size of 2 µm) at a ratio of 1:1 is formed on the colorless transparent epoxy resin, thus forming an insulating layer formed of these two resin layers. The resin layers may be formed by any method. A portion of the insulating layer, which is a corner region thereof, is subjected to diamond cutting to form a finished surface portion on an exposed portion of the metal substrate where the surface of the metal substrate is exposed. The finished surface portion is mirror-finished and is shiny, flat and smooth. The exposed portion is coated with a colorless transparent acrylic resin by electrodeposition coating to form an electrodeposited layer.

Since the electrodeposited layer is made of the transparent resin disposed on the mirror-finished surface portion, the shiny metallic texture of the finished surface portion can be seen through the transparent resin. This can significantly improve the metallic texture of the corner region of the metal member. Furthermore, since the transparent resin is flat and smooth, the electrodeposited layer can have a flat and smooth texture that visually and tactually conforms to the mirror-finished surface portion. On the other hand, since the insulating layer is made of a resin containing the Al and SiO₂ additive agent, the insulating layer can have both a shiny metallic texture and a matte metallic texture. The insulating layer can also visually have the texture of asperities (matte metallic texture) due to the additive agent together with the tactile texture of the asperities. Thus, the metal member includes tactually and visually different surface regions. Each of the regions has a tactile metallic texture that conforms to its visual metallic texture. This can significantly improve the metallic texture of a desired region.

### «Second Embodiment»

A metal member according to a second embodiment has substantially the same visual texture over its entire surface and includes regions having different tactile textures. The insulating layer and the electrodeposited layer are made of a colorless transparent acrylic resin containing a transparent SiO₂ (having an average particle size of 1 µm) additive agent. The insulating layer and the electrodeposited layer have different additive agent contents. For example, the additive agent content of the insulating layer is higher than the additive agent content of the electrodeposited layer. Since a high additive agent content results in a high degree of asperities, the electrodeposited layer and the insulating layer can have different tactual textures. In the removing step of the present embodiment, a portion of the insulating layer is removed by a method that does not substantially alter the surface texture of the exposed portion of the metal substrate. Thus, the entire surface of the metal substrate visually has the same metallic texture. Since the surface of the metal substrate can be seen through the covering layer made of a colorless transparent resin, the metal member according to the present embodiment has substantially the same visual texture. Thus, the metal member has a tactile texture that depends on the surface texture of the covering layer and a visual texture that depends on the visual surface texture of the metal substrate. The metal member can have tactually different surface textures.

### «Third Embodiment»

A metal member according to a third embodiment has letters or a pattern on its surface. The insulating layer and the electrodeposited layer are made of an opaque colored resin. The insulating layer and the electrodeposited layer have different colors. For example, in the insulating-layer-forming step, an insulating layer made of a black resin is formed on the entire surface of a metal substrate. A portion of the insulating layer is irradiated with a laser beam in a desired letter or pattern shape to form an exposed surface portion of the metal substrate where the surface of the metal substrate is exposed. The exposed portion is coated with a red resin by electrodeposition coating to form an electrodeposited layer. In accordance with this method, the electrodeposited layer and the insulating layer have different visual textures to draw red letters or a red pattern on the black background, thereby enhancing the commercial value of the metal member. The outlines of letters or a pattern can be clearly drawn by easily removing a fine portion of the insulating layer using a laser beam. As in the second embodiment, the insulating layer may be removed by a method that affects the surface texture of the exposed portion of the metal substrate or a method that does not substantially alter the surface texture of the exposed portion of the metal substrate. This is because the visual texture of the metal member according to the present embodiment also depends on the visual surface texture of the covering layer.

Although the present embodiment has focused on only different visual textures caused by the use of different-colored materials of the insulating layer and the electrodeposited layer, the insulating layer and the electrodeposited layer may also have different tactile textures by the addition of an additive agent to a colored resin.

### «Fourth Embodiment»

A metal member according to a fourth embodiment visually has a shiny metallic texture in a rough surface region and includes regions having different gloss levels. The insulating layer and the electrodeposited layer are made of a colorless transparent acrylic resin containing an Al additive agent (having an average particle size of 10 µm). The insulating layer and the electrodeposited layer have different additive agent contents. For example, the additive agent content of the insulating layer is higher than the additive agent content of the electrodeposited layer. Since a high additive agent content results in the shiny metallic texture of a deep color tone, the electrodeposited layer and the insulating layer can visually have the shiny metallic texture of different color tones. Since a high additive agent content results in a high degree of asperities, the electrodeposited layer and the insulating layer can also have different tactual textures. According to the embodiment, in the removing step, the insulating layer may be removed by a method that affects the surface texture of the exposed portion of the metal substrate or a method that does not substantially alter the surface texture of the exposed portion of the metal substrate. This is because the tactile texture and the visual texture of the metal member in the present embodiment depend on the tactile texture and the visual texture of the surface of the covering layer. According to the embodiment, the metal member can have tactually and visually different surface textures.

### «Test Example»

A metal member that included a metal substrate made of an AZ91-equivalent magnesium alloy and a covering layer disposed on the metal substrate was manufactured, and its appearance was examined.

### (Sample 1)

First, the entire surface of a metal substrate (size: approximately 90 mm x 60 mm x 3 mm) was subjected to chemical conversion treatment. An epoxy resin was applied to the treated metal substrate by spray coating to form a primer layer (having a thickness of 10 µm). An acrylic resin containing an additive agent that contained Al (having an average particle size of 10 µm) and SiO₂ (having an average particle size of 1 µm) at a ratio of 1:1 was applied to the epoxy resin by spray coating to complete an insulating layer (having a thickness of 15 µm). Thus, the insulating layer has a multilayer structure.

A comer region of the insulating layer was chamfered by diamond cutting to form an exposed surface portion of the metal substrate where the metal substrate is exposed on a surface as a portion of the insulating layer.

A transparent acrylic resin was applied to the exposed portion by electrodeposition coating to form an electrodeposited layer (having a thickness of 15 µm). The metal member (that included a covering layer formed of the insulating layer and the electrodeposited layer on the metal substrate) thus manufactured was referred to as a sample 1.

### (Sample 2)

First, the entire surface of the same metal substrate as in the sample 1 was subjected to sandblasting to form asperities. A corner region of the metal substrate having surface asperities was chamfered by diamond cutting. A transparent acrylic silicon resin was applied to the entire surface of the metal substrate by spray coating to form a covering layer (having a thickness of 15 µm). The metal member thus manufactured was referred to as a sample 2.

### (Sample 3)

First, the entire surface of the same metal substrate as in the sample 1 was subjected to sandblasting to form asperities. A corner region of the metal substrate having surface asperities was subjected to diamond cutting. An acrylic resin containing 3% by volume transparent SiO₂ (having an average particle size of 1 µm) additive agent was applied to the entire surface of the metal substrate by electrodeposition coating to form a covering layer (having a thickness of 15 µm). The metal member thus manufactured was referred to as a sample 3.

### (Evaluation)

As for visual textures of the sample 1, the sample 1 visually had a shiny metallic texture and a matte metallic texture in a region other than the corner region of the metal member. Only the chamfered corner region had a markedly shiny, flat and smooth metallic texture. As for the tactual textures, except for the corner region of the metal member, the sample 1 tactually had the texture of asperities due to the additive agent contained in the material of the insulating layer. The chamfered corner region had a flat and smooth texture. Thus, the chamfered corner region and the other region of the metal member of the sample 1 had different textures, and each of the regions had a visual metallic texture that conforms to its tactile metallic texture. In the sample 2 and the sample 3, the metal substrate has a flat and smooth surface of a covering layer that is coated uniformly. Thus, the metal member could not include regions having different surface textures. In the sample 2, the rough metal substrate could be seen through the transparent covering layer. Thus, the sample 2 had a visual texture due to the asperities of the metal substrate. However, the sample 2 had a tactually flat and smooth texture and could not have a visual metallic texture that conforms to its tactile metallic texture. The sample 3 had a visually and tactually matte metallic texture because of the uniformly rough covering layer. Because of the entirely uniform surface of the metal member, the sample 3 could not had the metallic texture of the metal substrate.

These results show that a metal member according to the present invention that includes a covering layer on a metal substrate includes surface regions having different visual or tactile textures, and each of the regions has a visual metallic texture that conforms to its tactile metallic texture. Thus, the metal member has a high quality appearance, a very high metallic texture, and a high commercial value.

### Industrial Applicability

A metal member according to the present invention can be suitably used as a housing for portable electrical equipment. Furthermore, a method for manufacturing a metal member according to the present invention can be suitably used to manufacture the metal member according to the present invention.

### Reference Signs List

- 1: metal member
- 10: metal substrate
- 20: covering layer
- 21: insulating layer
- 22: electrodeposited layer
- 30: exposed portion

## Claims

1. A metal member (1) comprising:
a metal substrate (10) which includes a mirror-finished surface portion on a part of the surface of the metal substrate (10); and
a covering layer (20) disposed on a surface of the metal substrate (10),
wherein the covering layer (20) includes a region containing an insulating layer (21) made of an insulating material, and a region containing an electrodeposited layer (22) having a different texture from the insulating layer (21) and formed by electrodeposition coating,
wherein the electrodeposited layer (22) is made of a transparent resin disposed on the mirror-finished surface-portion, and
**characterized in that** the insulating layer (21) is made of a resin which contains a particulate additive agent of Al or SiO₂, wherein the amount of Al to be added is in the range of 1 % to 30% by volume of the insulating layer (21), and the amount of SiO₂ to be added is in the range of 0.5% to 30% by volume of the insulating layer (21).

2. The metal member (1) according to claim 1, wherein the texture includes a tactile texture.

3. The metal member (1) according to claim 1 or claim 2, wherein the texture includes a visual texture.

4. The metal member (1) according to any one of claims 1 to 3, wherein the electrodeposited layer (22) formed by electrodeposition coating is made of a resin containing the additive agent.

5. The metal member (1) according to any one of claims 1 to 4, wherein the insulating layer (21) and the electrodeposited layer (22) formed by electrodeposition coating have different colors.

6. The metal member (1) according to any one of claims 1 to 5, wherein the metal substrate (10) is made of a magnesium alloy.

7. The metal member (1) according to claim 6, wherein the magnesium alloy contains Al as an additive element, Al constituting 2.5% to 9.5% by mass of the magnesium alloy.

8. A method for manufacturing a metal member (1) by forming a covering layer (20) on a surface of a metal substrate (10), the method comprising:
an insulating-layer-forming step of forming an insulating layer (21) made of an insulating material on the entire surface of a region of the metal substrate (10) in which the covering layer (20) is to be formed;
a removing step of removing a portion of the insulating layer (21) to form an exposed portion (30) of the metal substrate (10) where the metal substrate (10) is exposed on a surface and includes a mirror-finished surface portion on a part of the surface of the metal substrate (10); and
an electrodeposited-layer-forming step of applying a paint having a different texture from the insulating layer (21) to the exposed portion by electrodeposition coating to form an electrodeposited layer (22),
wherein the electrodeposited layer (22) is made of a transparent resin and is disposed on the mirror-finished surface portion, and
wherein the covering layer (20) includes the insulating layer (21) and the electrodeposited layer (22), and
**characterized in that** the insulating layer (21) is made of a resin which contains a particulate additive agent of Al or SiO₂, wherein the amount of Al to be added is in the range of 1 % to 30% by volume of the insulating layer (21), and the amount of SiO₂ to be added is in the range of 0.5% to 30% by volume of the insulating layer (21).

9. The method for manufacturing a metal member (1) according to claim 8, wherein the removing step is performed by irradiating the insulating layer (21) with a laser beam.

## Patentansprüche

1. Metallteil (1), umfassend:
ein Metallsubstrat (10), das einen Spiegel-bearbeiteten Oberflächenbereich auf einem Teil der Oberfläche des Metallsubstrates (10) enthält, und
eine Abdeckschicht (20), die auf einer Oberfläche des Metallsubstrates (10) angeordnet ist,
worin die Abdeckschicht (20) einen Bereich, umfassend eine Isolationsschicht (21) aus einem Isolationsmaterial und einen Bereich, umfassend eine elektroniedergeschlagene Schicht (22) mit einer anderen Textur als die Isolationsschicht (21) und gebildet durch Elektroniederschlagsbeschichtung, enthält,
worin die elektroniedergeschlagene Schicht (22) aus einem transparenten Harz erzeugt ist, angeordnet auf dem Spiegel-bearbeiteten Oberflächenbereich, und
**dadurch gekennzeichnet, daß** die Isolationsschicht (21) aus einem Harz erzeugt ist, das ein teilchenförmiges Additivmittel aus Al oder SiO₂ enthält, worin die Menge an Al, die zugegeben wird, im Bereich von 1 bis 30 Vol.% der Isolationsschicht (21) ist und die Menge von zuzugebendem SiO₂ im Bereich von 0,5 bis 30 Vol.% der Isolationsschicht (21) ist.

2. Metallteil (1) nach Anspruch 1, worin die Textur eine haptische Textur enthält.

3. Metallteil (1) nach Anspruch 1 oder 2, worin die Textur eine visuelle Textur enthält.

4. Metallteil (1) nach einem der Ansprüche 1 bis 3, worin die elektroniedergeschlagene Schicht (22), gebildet durch Elektroniederschlagsbeschichtung, aus einem Harz ist, das das Additivmittel enthält.

5. Metallteil (1) nach einem der Ansprüche 1 bis 4, worin die Isolationsschicht (21) und die elektroniedergeschlagene Schicht (22), gebildet durch Elektroniederschlagsbeschichtung, unterschiedliche Farben haben.

6. Metallteil (1) nach einem der Ansprüche 1 bis 5, worin das Metallsubstrat (10) aus einer Magnesium-Legierung erzeugt ist.

7. Metallteil (1) nach Anspruch 6, worin die Magnesium-Legierung Al als Additivelement enthält, wobei Al 2,5 bis 9,5 mass% der Magnesium-Legierung ausmacht.

8. Verfahren zur Erzeugung eines Metallteils (1) durch Bildung einer Abdeckschicht (20) auf einer Oberfläche eines Metallsubstrates (10), wobei das Verfahren enthält:
einen Bildungsschritt für eine Isolationsschicht zur Bildung einer Isolationsschicht (21), erzeugt aus einem Isolationsmaterial, auf der gesamten Oberfläche eines Bereiches des Metallsubstrates (10), bei dem die Abdeckschicht (20) gebildet werden soll;
einen Entfernungsschritt zur Entfernung eines Bereiches der Isolationsschicht (21), zur Bildung eines freiliegenden Bereiches (30) des Metallsubstrates (10), bei dem das Metallsubstrat (10) auf einer Oberfläche frei liegt und einen Spiegel-bearbeiteten Oberflächenbereich auf einem Teil der Oberfläche des Metallsubstrates (10) enthält; und
einen Bildungsschritt für eine elektroniedergeschlagene Schicht zum Auftragen einer Farbe mit einer anderen Struktur von der Isolationsschicht (21) auf den freiliegenden Bereich durch Elektroniederschlagsbeschichtung, zur Bildung einer elektroniedergeschlagenen Schicht (22),
worin die elektroniedergeschlagene Schicht (22) aus einem transparenten Harz erzeugt ist und auf dem Spiegel-bearbeiteten Oberflächenbereich angeordnet ist, und
worin die Abdeckschicht (20) die Isolationsschicht (21) und die elektroniedergeschlagene Schicht (22) enthält, und
**dadurch gekennzeichnet, daß** die Isolationsschicht (21) aus einem Harz erzeugt ist, das ein teilchenförmiges Additivmittel aus Al oder SiO₂ enthält, worin die Menge an zuzugebendem Al im Bereich von 1 bis 30 Vol.% der Isolationsschicht (21) ist und die Menge an zuzugebendem SiO₂ im Bereich von 0,5 bis 30 Vol.% der Isolationsschicht (21) ist.

9. Verfahren zur Herstellung eines Metallteilchens (1) nach Anspruch 8, worin der Entfernungsschritt durch Bestrahlen der Isolationsschicht (21) mit einem Laserstrahl durchgeführt wird.

## Revendications

1. Elément métallique (1), comprenant :
un substrat métallique (10) qui comprend une portion superficielle à fini miroir sur une partie de la surface du substrat métallique (10) ; et
une couche de recouvrement (20) disposée sur une surface du substrat métallique (10),
dans lequel la couche de recouvrement (20) comprend une région contenant une couche isolante (21) constituée d'un matériau isolant, et une région contenant une couche déposée par électrolyse (22) ayant une texture différente de la couche isolante (21) et formée grâce à un revêtement par électrodéposition,
dans lequel la couche déposée par électrolyse (22) est constituée d'une résine transparente disposée sur la portion superficielle à fini miroir, et
**caractérisé en ce que** la couche isolante (21) est constituée d'une résine qui contient un agent additif particulaire d'Al ou de SiO₂, dans lequel la quantité d'Al à ajouter se situe dans la plage de 1 % à 30 % en volume de la couche isolante (21) et la quantité de SiO₂ à ajouter est située dans la plage de 0,5 % à 30 % en volume de la couche isolante (21).

2. Elément métallique (1) selon la revendication 1, dans lequel la texture comprend une texture tactile.

3. Elément métallique (1) selon la revendication 1 ou la revendication 2, dans lequel la texture comprend une texture visuelle.

4. Elément métallique (1) selon l'une quelconque des revendications 1 à 3, dans lequel la couche déposée par électrolyse (22) formée grâce à un revêtement par électrodéposition est constituée d'une résine contenant l'agent additif.

5. Elément métallique (1) selon l'une quelconque des revendications 1 à 4, dans lequel la couche isolante (21) et la couche déposée par électrolyse (22) formée grâce à un revêtement par électrodéposition ont des couleurs différentes.

6. Elément métallique (1) selon l'une quelconque des revendications 1 à 5, dans lequel le substrat métallique (10) est constitué d'un alliage de magnésium.

7. Elément métallique (1) selon la revendication 6, dans lequel l'alliage de magnésium contient du Al comme élément additif, l'Al constituant 2,5 % à 9,5 % en poids de l'alliage de magnésium.

8. Procédé de fabrication d'un élément métallique (1) par la formation d'une couche de recouvrement (20) sur une surface d'un substrat métallique (10), ledit procédé comprenant :
une étape de formation d'une couche isolante consistant à former une couche isolante (21) constituée d'un matériau isolant sur toute la surface d'une région du substrat métallique (10) dans lequel la couche de recouvrement (20) doit être formée ;
une étape d'élimination consistant à éliminer une portion de la couche isolante (21) afin de former une portion à nu (30) du substrat métallique (10) où le substrat métallique (10) est à nu sur une surface et comprend une portion superficielle à fini miroir sur une partie de la surface du substrat métallique (10) ; et
une étape de formation d'une couche déposée par électrolyse consistant à appliquer une peinture ayant une texture différente de la couche isolante (21) sur la portion à nu grâce à un revêtement par électrodéposition de manière à former une couche déposée par électrolyse (22),
dans lequel la couche déposée par électrolyse (22) est constituée d'une résine transparente et est disposée sur une portion superficielle à fini miroir, et
dans lequel la couche de recouvrement (20) comprend la couche isolante (21) et la couche déposée par électrolyse (22), et
**caractérisé en ce que** la couche isolante (21) est constituée d'une résine qui contient un agent additif particulaire d'Al ou de SiO₂, dans lequel la quantité d'Al à ajouter se situe dans la plage de 1 % à 30 % en volume de la couche isolante (21) et la quantité de SiO₂ à ajouter est située dans la plage de 0,5 % à 30 % en volume de la couche isolante (21).

9. Procédé de fabrication d'un élément métallique (1) selon la revendication 8, dans lequel l'étape d'élimination est réalisée par irradiation de la couche isolante (21) avec un faisceau laser.
